Europäisches Patentamt

European Patent Office

Office européen des brevets

(19)

(11) Veröffentlichungsnummer: **0 019 711**
**B1**

(12) # EUROPÄISCHE PATENTSCHRIFT

(45) Veröffentlichungstag der Patentschrift:
**27.12.84**

(51) Int. Cl.³: **A 22 C 11/02**

(21) Anmeldenummer: **80101951.4**

(22) Anmeldetag: **11.04.80**

(54) **Vorrichtung zum intermittierenden Ausstossen einer Wurstmasse o. dgl.**

(30) Priorität: **26.05.79 DE 2921427**

(43) Veröffentlichungstag der Anmeldung:
**10.12.80 Patentblatt 80/25**

(45) Bekanntmachung des Hinweises auf die Patenterteilung:
**27.12.84 Patentblatt 84/52**

(84) Benannte Vertragsstaaten:
**CH FR IT LI**

(56) Entgegenhaltungen:
**EP - A - 0 013 552**
**CH - A - 442 125**
**DE - A - 2 249 070**
**US - A - 2 999 270**
**US - A - 3 207 368**

**Firmenprospekte "Robot 3000 SR3" und "Portiomat Typ 11002" der VEMAG**

(73) Patentinhaber: **VEMAG Verdener Maschinen- und Apparatebau GmbH, Weserstrasse 32, D-2810 Verden (Aller) (DE)**

(72) Erfinder: **Meìer, Dieter, Eickhoop 140, D-2816 Kirchlinteln Holtum-Geest (DE)**

(74) Vertreter: **Eisenführ & Speiser, Martinistrasse 24, D-2800 Bremen 1 (DE)**

ACTORUM AG

## Beschreibung

Die Erfindung betrifft eine Vorrichtung gemäss dem Oberbegriff des Anspruches 1.

Eine derartige Vorrichtung ist aus den Firmenprospekten «Robot 3000 SR 3» und «Portiomat Typ 110 02» der Anmelderin bekannt. Die zweispindlige Schraubenpumpe wird durch eine elektromagnetisch betätigte Kupplung/Bremskombination mit einem vorgegebenem Takt intermittierend betrieben, wobei eine Steuervorrichtung bei jedem Betriebsintervall die Kupplung einschaltet, den während des Betriebsintervalls zurückgelegten Drehwinkel misst und bei Erreichen eines vorgegebenen Drehwinkels die Kupplung wieder abschaltet und die Pumpe abbremst und zum Stillstand bringt. Anschliessend dreht eine Abdrehvorrichtung den an die zuletzt eingefüllte Portion angrenzenden Hüllenabschnitt ab. Nach dem Abdrehvorgang setzt dann der nächste Einfüllvorgang ein usw.

Nachteilig bei der bekannten Vorrichtung ist es dabei insbesondere, dass das Nachlaufvolumen an Wurstmasse, welches während des Abbremsvorganges noch in die zuletzt eingefüllte Portion gefördert wird, bei der Einstellung des gewünschten Portionsvolumens nur recht ungenau berücksichtigt werden kann, da der zeitliche Verlauf des Abbremsvorganges in Abhängigkeit von dem während des Abbremsvorganges geförderten Nachlaufvolumen unbeeinflussbar abläuft. Bei konstanter Last, stabilen Temperaturverhältnissen und korrektem mechanischen Zustand der Vorrichtung lässt sich zwar das Nachlaufvolumen abschätzen und der Abbremsvorgang zu einem solchen Zeitpunkt auslösen, dass das bis zum Auslösen des Abbremsvorgangs geförderte Volumen an Wurstmasse und das anschliessend noch nachfliessende, geschützte Nachlaufvolumen etwa gleich dem gewünschten Portionsvolumen ist. Bei unterschiedlicher Last, instabilen Temperaturverhältnissen und/oder Drehzahländerungen der Förderschrauben schwankt jedoch der Nachlauf und damit die erhaltene Portionsgrösse.

In der nicht vorveröffentlichten europäischen Patentanmeldung 80 100 009.2 (veröffentlicht als EP-A-0 013 552) mit älterer Priorität wird ein Verfahren zum Portionieren von Wurstmasse beschrieben, bei dem nach Beendigung jedes Ausstossvorganges der nachfolgende Nachlauf gemessen wird, und die Differenz zwischen dem Sollwert der Portionen und dem gemessenen Nachlauf gebildet wird und der darauffolgende Ausstossvorgang beendet wird, sobald die in die einzelne Portion abgegebene Wurstmasse diesen Differenzwert erreicht hat. Angegeben wird ferner eine Vorrichtung mit Flügelzellenpumpe zur Verwirklichung des beschriebenen Verfahrens. Die vorliegende Erfindung unterscheidet sich hiervon dadurch, dass sie eine Vorrichtung mit einer zwei Förderschrauben enthaltenen Schraubenpumpe betrifft.

Aufgabe der Erfindung ist es, eine Vorrichtung der eingangs genannten Art derart weiterzubilden, dass die Vorrichtung auch über lange Betriebszeiten hinweg und bei schwankenden Last-, Temperatur- und Drehzahlverhältnissen die gewählten Portionsvolumen genau einhält.

Diese Aufgabe wird erfindungsgemäss durch die kennzeichnenden Merkmale des Hauptanspruchs gelöst.

Die Vorteile der Erfindung liegen insbesondere darin, dass der tatsächliche Nachlauf an Wurstmasse während der Abbremsphase vorausgegangener Ausstossvorgänge ermittelt wird, und dass beim jeweils aktuellen Ausstossvorgang die Abbremsung der Förderschraube dann ausgelöst wird, wenn der während dieses Ausstossvorganges geförderte Ausstoss bis auf den zuvor ermittelten Nachlauf gleich der gewünschten Portionsgrösse ist. Der während der anschliessenden Abbremsung der Förderschrauben nachfliessende Nachlauf ist im wesentlichen gleich dem zuvor ermittelten Nachlauf, um welchen der Ausstossvorgang verkürzt wurde, so dass der Nachlauf den Ausstoss recht genau bis zur gewünschten Portionsgrösse ergänzt.

Portionsgrösse, Nachlauf und Ausstoss lassen sich jeweils durch Wägung, d.h. in Form des entsprechenden Gewichts, bevorzugt jedoch als Portionsvolumen, Nachlaufvolumen und Ausstossvolumen messen, da die Volumen-Messung auch bei der im allgemeinen hohen Taktfrequenz des Ausstossvorganges im Gegensatz zu einer Gewichtsbestimmung problemlos ist.

Bevorzugt wird das Nachlaufvolumen jeweils während der Abbremsung des unmittelbar vorausgehenden Ausstossvorganges gemessen. Die Wahrscheinlichkeit, dass das Nachlaufvolumen des aktuellen Ausstossvorganges gleich dem unmittelbar zuvor ermittelten Nachlaufvolumen ist, ist dann relativ gross, da Langzeitschwankungen in der Last, der Temperatur usw. eliminiert sind.

Alternativ lässt sich das Nachlaufvolumen auch als Mittelwert aus mehreren Einzelwerten bestimmen, die während der Abbremsung einer vorgegebenen Zahl unmittelbar vorausgegangener Ausstossvorgänge gemessen werden, wodurch statistische Schwankungen ebenfalls eliminiert werden.

Vorteilhafte Weiterbildungen der Erfindung sind durch die Merkmale der Unteransprüche gekennzeichnet.

Im folgenden werden Ausführungsbeispiele der Erfindung anhand der Zeichnung näher erläutert. Es zeigen:

Fig. 1 einen zeitlichen Funktionsablauf der erfindungsgemässen Vorrichtung;

Fig. 2 eine erste Ausführungsform der erfindungsgemässen Vorrichtung; und

Fig. 3 eine zweite Ausführungsform der erfindungsgemässen Vorrichtung.

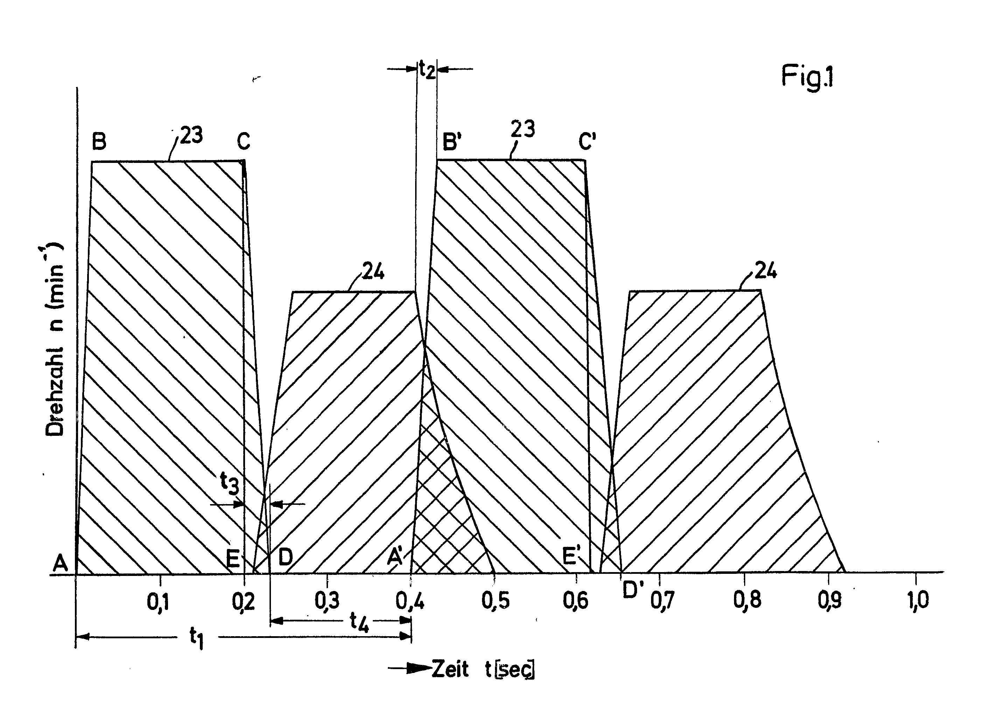

Fig. 1 zeigt den zeitlichen Funktionsablauf einer Ausführungsform der erfindungsgemässen Vorrichtung, bei der Wurstmasse in eine Schlauchhülle eingefüllt wird, und die z.B. eine Schraubenpumpe 2 mit mindestens einer rotierenden Förderschraube als Förderpumpe besitzt und eine Abdrehvorrichtung als Trennvorrichtung enthält. Dargestellt ist der Wechsel der Betriebsintervalle 23 der Förderpumpe und der Trennintervalle 24. Die Betriebsintervalle 23 der Förderpumpe erreichen nach einer kurzen Beschleunigungszeit $t_2$ – Kurvenabschnitt AB – die Enddrehzahl, die während des Kurvenabschnitts BC beibehalten wird. Das bis zu dem Zeitpunkt C während des Betriebsintervalls durch die Förderpumpe geförderte Volumen entspricht der Fläche ABCE, die sich durch Integration über die Kurve, zwischen A und C bzw. durch Aufsummierung der bis zum Punkt C abgelaufenen Umdrehungen der Förderschraube ergibt. Am Punkt C wird die Drehbewegung der Förderschraube abgebremst, die dann nach einer kurzen Bremszeit $t_3$ am Punkt D zum Stillstand kommt. Während des Abbremsintervalls schliesst ein Nachlaufvolumen an Wurstmasse in die zuletzt eingefüllte Portion, welches der durch die Punkte CDE bestimmten Fläche entspricht. Da der Abbremsvorgang durch die Steuervorrichtung nicht kontrolliert werden kann, muss der Abbremsvorgang dann ausgelöst werden, wenn das bis zum Auslösezeitpunkt geförderte Volumen bis auf das Nachlaufvolumen dem gewünschten Portionsvolumen ist. Während des Abbremsintervalls fliesst dann das Nachlaufvolumen in die aktuelle Portion zu, wodurch das gewünschte Portionsvolumen erreicht wird.

Vor Erreichen des völligen Stillstands der Förderschraube, Punkt D, wird die Abdrehvorrichtung gestartet und dreht nach einer kurzen Anlaufphase den an die zuletzt eingefüllte Portion angrenzenden Hüllenabschnitt über eine vorgegebene Zeit mit vorgegebener Drehzahl ab. Anschliessend wird die Abdrehvorrichtung abgeschaltet und kommt nach einer kurzen Abklingphase zum Stillstand. Gleichzeitig mit dem Ausschalten der Abdrehvorrichtung wird die Förderschraube erneut eingeschaltet, Punkt A', und durchläuft den nächsten Betriebsintervall A'B'C'D'. Durch die Überlappung der Betriebsintervalle 23 und der Trennintervalle 24 lässt sich die Taktzeit $t_1$, die vom Auslösen eines Betriebsintervalls bis zum Auslösen des nächsten Betriebsintervalls zählt, erhöhen. Die Taktzeit $t_1$ und die Pausenzeit $t_4$ – vom Stillstand eines Betriebsintervalls bis zum Einsetzen des nächsten Betriebsintervalls – lassen sich ebenso wie die Drehzahlen vorgeben.

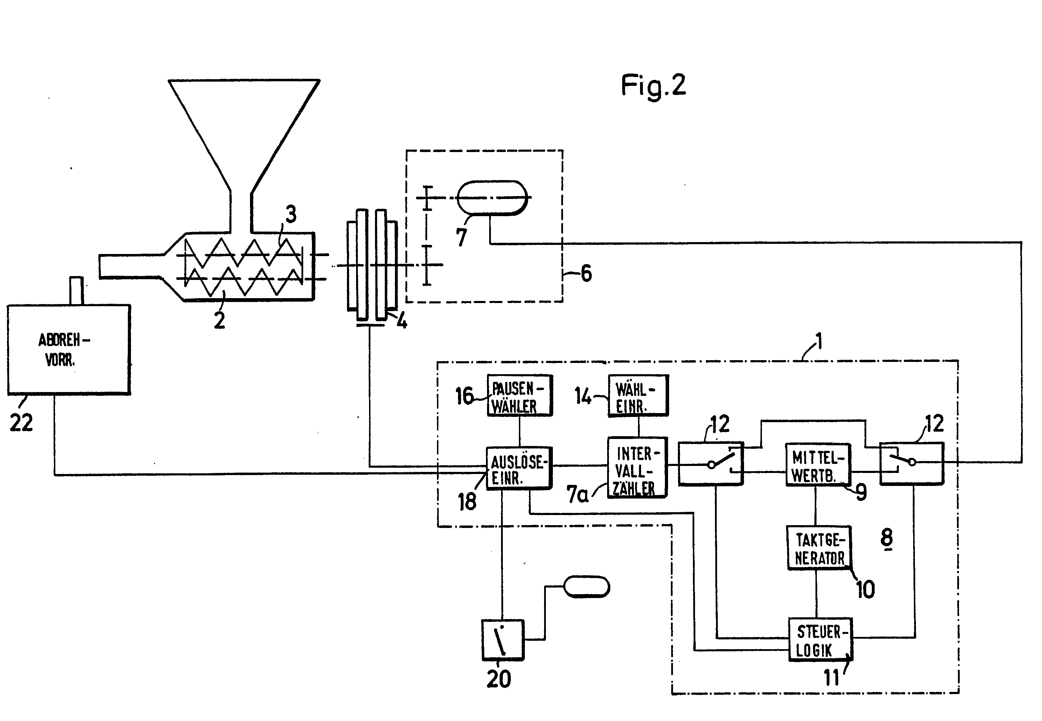

Fig. 2 zeigt eine erste Ausführungsform der erfindungsgemässen Vorrichtung zum Ausstossen von Wurstmasse in eine schlauchförmige Hülle. Eine Förderpumpe 2 besitzt zwei zusammenwirkende Förderschrauben 3 und wird über eine elektromagnetisch betätigbare Kupplung 4 intermittierend an einen kontinuierlich arbeitenden Antrieb angeschlossen. Die Förderpumpe fördert während der Betriebsintervalle Wurstmasse in eine schlauchförmige Hülle, die über eine Tülle am Förderausgang nachgeführt wird. Die Wurstmasse wird in Portionen mit gewünschtem Portionsvolumen in die schlauchförmige Hülle abgegeben.

Eine Abdrehvorrichtung 22 dreht den an die zuletzt eingefüllte Portion angrenzenden leeren Hüllenabschnitt ab, sobald eine Steuervorrichtung 1 entsprechend dem in Fig. 1 dargestellten Funktionsablauf das aktuelle Betriebsintervall der Förderschrauben 3 abbremst und die Abdrehvorrichtung aktiviert. An der Kupplungsabtriebswelle sitzt eine Messeinrichtung 6, die einen Messwandler 7 enthält, der den Drehwinkel der Förderschrauben 3 misst und in eine dem Drehwinkel proportionale Anzahl elektrischer Ausgangsimpulse umsetzt. Werden die innerhalb eines beliebigen Zeitintervalls abgegebenen Ausgangsimpulse gezählt, so stellt diese Zahl ein Mass des Fördervolumens dar, welches während des Zeitintervalls von der Pumpe gefördert wurde.

Dem Messwandler 7 ist ein Intervallzähler 7a nachgeschaltet, dessen Zählintervall von einer Wähleinrichtung 14 programmierbar ist und dem gewünschten Portionsvolumen entspricht. Die Wähleinrichtung kann z.B. aus einem Dekadenschalter oder einer Tasten-Eingabeeinrichtung bestehen, der ein Zwischenspeicher nachgeschaltet ist. Der Ausgang des Intervallzählers 7a ist mit einer Auslöseeinrichtung 18 verbunden. Die Auslöseeinrichtung 18 besitzt einen ersten Steuerausgang, der mit der elektromagnetischen Steuerung der Kupplung 4 verbunden ist, und einen zweiten Steuerausgang, der mit der Abdrehvorrichtung 22 verbunden ist. Die gesamte Steuervorrichtung 1 wird von einem Kniehebelschalter 20, dessen Ausgang ebenfalls mit der Auslöseeinrichtung 18 verbunden ist, in den aktiven oder inaktiven Zustand gesetzt.

Vor den Intervallzähler 7a ist mittels elektrischer Umschalter 12 eine Einrichtung 8 zur Ermittlung des Nachlaufvolumens anschaltbar. Die Einrichtung 8 enthält einen Mittelwertbildner 9, einen Taktgenerator 10 und eine Steuerlogik 11, wobei der Taktgenerator mit dem Mittelwertbildner 9 und der Steuerlogik 11 verbunden ist und zum Umspeichern des gebildeten Mittelwerts in dem Intervallzähler 7a dient. Die Steuerlogik 11 schaltet die Umschalter 12 jeweils zum richtigen Zeitpunkt in ihre erste Stellung um, in der der Intervallzähler 7a direkt mit dem Messwandler 7 verbunden ist. Die Steuerlogik 11 schaltet ferner während jedes Abbremsintervalls die Einrichtung 8 an den Messwandler 7, um jeweils das entsprechende Nachlaufvolumen zu messen und zusammen mit einer jeweils vorgegebenen konstanten Anzahl an dem aktuellen Betriebsintervall unmittelbar vorausgegangenen Messwerten im Mittelwertbildner 9 einen Mittelwert zu bilden und als «ermitteltes Nachlaufvolumen» verfügbar zu halten.

Der Intervallzähler 7a durchläuft bei Empfang von Zählimpulsen das von der Wähleinrichtung 14 vorgegebene Zählintervall, das dem gewünschten Portionsvolumen entspricht. Am Ende des Zählintervalls gibt der Intervallzähler 7a einen Auslöseimpuls an die Auslöseeinrichtung 18 ab, die gleichzeitig einen Abbremsimpuls an die Steuerung der Kupplung 4 abgibt und das aktuelle Betriebsintervall abbremst. Gleichzeitig mit der Abgabe des Auslöseimpulses setzt sich der Intervallzähler 7a auf den Anfang des Zählintervalls zurück. Während des nun ablaufenden aktuellen Abbremsintervalls wird die Einrichtung 8 an den Messwandler 7 angeschlossen, zählt das Nachlaufvolumen und aktualisiert mittels dieses Messwerts den verfügbar gehaltenen Mittelwert des ermittelten Nachlaufvolumens. Sobald der aktualisierte Mittelwert zur Verfügung steht, nämlich in der dem letzten Betriebsintervall nachfolgenden Pausenzeit, verbindet die Steuerlogik 11 den Mittelwertbildner 9 mit dem Intervallzähler 7a und gibt eine dem Mittelwert des ermittelten Nachlaufvolumens entsprechende Anzahl an Zählimpulsen an den Intervallzähler 7a ab, wodurch das Zählintervall um das mittlere Nachlaufvolumen verkürzt wird. Anschliessend wird vor Beginn eines neuen Betriebsintervalls der Intervallzähler 7a mit dem Messwandler 7 direkt verbunden. Der Intervallzähler zählt dann – an den gehaltenen letzten Zählwert anschliessend – die Ausgabeimpulse des Messwandlers, die dem ab Beginn des Betriebsintervalls geförderten Fördervolumen entsprechen. Wird das Ende des Zählintervalls erreicht, wird ein neuer Auslöseimpuls zum Abbremsen der Förderschraube 3 abgegeben, und der Zähler setzt sich erneut zurück. Während des Abbremsintervalls aktualisiert die Einrichtung 8 den Mittelwert des ermittelten Nachlaufvolumens.

Bei diesem Funktionsablauf wird die Abbremsung des aktuellen Betriebsintervalls, Punkt C, ausgelöst, nachdem ein um das mittlere Nachlaufvolumen verkürztes Zählintervall bzw. Zeitintervall durchschritten ist. Während des dann folgenden aktuellen Abbremsintervalls läuft das Nachlaufvolumen in die aktuelle Portion nach und ergänzt damit das Gesamtvolumen auf das gewünschte Portionsvolumen.

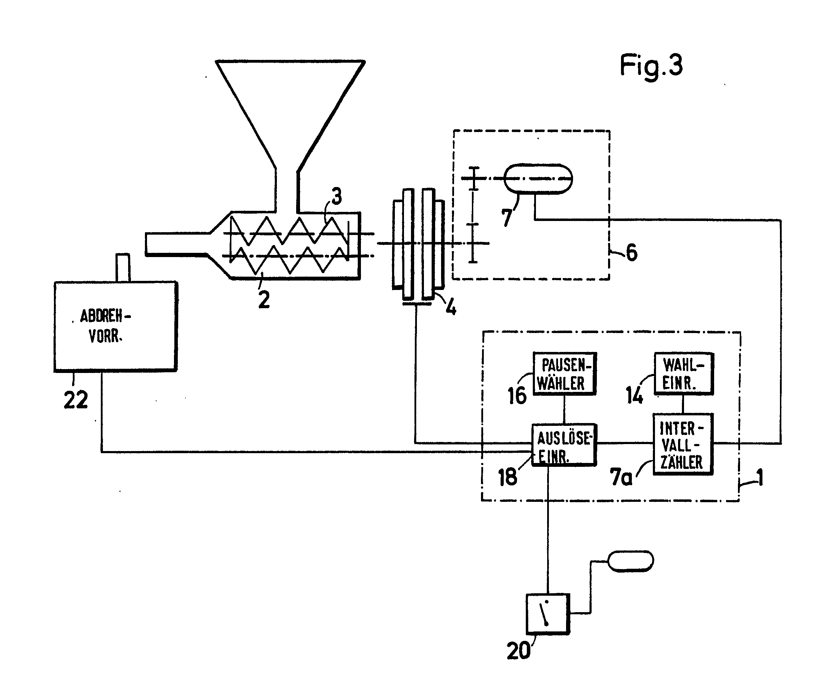

In Fig. 3 ist eine weitere Ausführungsform der Erfindung dargestellt, die im wesentlichen der Ausführungsform nach Fig. 2 entspricht, jedoch bei der Ermittlung des Nachlaufvolumens ohne Mittelwertbildung arbeitet, sondern jeweils nur das während der Abbremsung des vorausgegangenen Betriebsintervalls gemessene Nachlaufvolumen als aktuelles Nachlaufvolumen zur Verfügung hält.

Der Intervallzähler 7a enthält, wie schon in der Ausführungsform nach Fig. 2, von der Wähleinrichtung 14 ein Zählintervall einprogrammiert, das dem gewünschten Portionsvolumen entspricht. Am Ende des Zählintervalls löst der Zähler einen Auslöseimpuls zum Abbremsen der Förderschrauben 3 aus und setzt sich gleichzeitig an den Anfang des Zählintervalls zurück. Der Intervallzähler 7a ist ständig mit dem Messwandler 7 der Messeinrichtung 6 verbunden und erhält unmittelbar nach dem Zurücksetzen, d.h. nach dem Auslösen des aktuellen Abbremsvorganges, die dem ermittelten Nachlaufvolumen entsprechende Anzahl an Impulsen vom Messwandler 7 zugeführt, wodurch sich das vorgegebene Zählintervall um das gerade gemessene Nachlaufvolumen verkürzt. Mit dem Einsetzen des nächsten Betriebsintervalls zählt der Intervallzähler 7a das verkürzte Zählintervall voll und gibt dann einen Auslöseimpuls zum Abbremsen der Förderschrauben 3 ab und setzt sich erneut zurück. Bis zum Abbremszeitpunkt wird daher in dem aktuellen Betriebsintervall eine Fördermenge gefördert, die der Volumendifferenz (verkürztes Zählintervall) aus Portionsvolumen (vorgegebenes Zählintervall) und Nachlaufvolumen entspricht. Die Anfüllung der aktuellen Portion auf das gewünschte Portionsvolumen erfolgt dann während des Abbremsvorganges durch das Nachlaufen des Nachlaufvolumens.

In den Ausführungsformen nach Fig. 2 und 3 besitzt der Intervallzähler 7a die Funktion einer Subtraktionseinrichtung, die das Nachlaufvolumen (Anzahl an im Abbremsintervall gezählten Zählimpulsen) von dem gewünschten Portionsvolumen (vorgegebenes Zählintervall) subtrahiert und dadurch das verkürzte Zählintervall erzeugt. Bei der Ausführungsform nach Fig. 3 stellt der Intervallzähler 7a zusätzlich die Einrichtungen 8 zur Ermittlung des Nachlaufvolumens dar, zusätzliche Einrichtungen 8 werden bei dieser Ausführungsform nicht benötigt.

## Patentansprüche

1. Vorrichtung zum intermittierenden Ausstossen einer Wurstmasse od.dgl. mit einer zwei Förderschrauben (3) enthaltenden Schraubenpumpe (2), die intermittierend betrieben wird und während der Betriebsintervalle die Wurstmasse in Behälter oder Hüllen in Portionen mit vorgegebenem Portionsvolumen ausstösst, gegebenenfalls mit einer Trennvorrichtung zum Trennen der zuletzt ausgestossenen Portion von der nächsten Portion, und mit einer Steuervorrichtung (1), die eine Wähleinrichtung (14) zur Eingabe des gewünschten Portionsvolumens, eine Messeinrichtung (6) zur Messung des Ausstossvolumens der einzelnen Betriebsintervalle, und eine Auslöseeinrichtung (18) enthält, die jeweils bei Erreichen eines bestimmten Ausstossvolumens eine Abbremsung der Förderschrauben (3), gegebenenfalls anschliessend einen Trennvorgang und anschliessend ein neues Betriebsintervall der Förderschrauben auslöst, wobei während der Abbremsung der Förderschrauben ein Nachlaufvolumen an Wurstmasse in die zuletzt ausgestossene Portion fliesst, dadurch gekennzeichnet, dass die Messeinrichtung (6) Einrichtungen (8) zur Ermittlung des Nachlaufvolumens enthält, dass eine Subtraktionseinrichtung (7a) vorgesehen ist, die die Differenz aus dem vorgegebenen Portionsvolumen und dem ermittelten Nachlaufvolumen bildet und zwischenspeichert, und dass die Auslöseeinrichtung (18) jeweils die Abbremsung der Förderschrauben (3) auslöst, wenn das von der Messeinrichtung (6) gemessene aktuelle Ausstossvolumen des aktuellen Betriebsintervalls gleich der zwischengespeicherten Volumendifferenz ist.

2. Vorrichtung nach Anspruch 1, dadurch gekennzeichnet, dass die Schraubenpumpe (2) über eine Kupplung (4) intermittierend antreibbar ist, dass die Messeinrichtung (6) einen Messwandler (7) enthält, der den Drehwinkel der Schraubenpumpe (2) misst und eine dem Drehwinkel proportionale Zahl an elektrischen Ausgangsimpulsen abgibt, und dass die Einrichtungen (8) zur Ermittlung des Nachlaufvolumens dem Messwandler (7) nachgeschaltet sind und das Nachlaufvolumen als eine entsprechende Zahl der Ausgangsimpulse des Messwandlers (7) ermitteln.

3. Vorrichtung nach Anspruch 2, dadurch gekennzeichnet, dass die Einrichtungen (8) das Nachlaufvolumen während der Abbremsung jedes Betriebsintervalls messen.

4. Vorrichtung nach Anspruch 3, dadurch gekennzeichnet, dass die Einrichtungen (8) jeweils nur die Messung unmittelbar vor dem aktuellen Betriebsintervall zur Ermittlung des Nachlaufvolumens heranziehen.

5. Vorrichtung nach Anspruch 4, dadurch gekennzeichnet, dass die Einrichtungen (8) jeweils eine vorgegebene konstante Anzahl an dem aktuellen Betriebsintervall unmittelbar vorausgegangenen Messwerten speichern und in einem Mittelwertbildner (9) zur Ermittlung des Nachlaufvolumens einen Mittelwert bilden.

6. Vorrichtung nach einem der Ansprüche 1 bis 4, dadurch gekennzeichnet, dass dem Messwandler (7) ein Intervallzähler (7a) nachgeschaltet ist, der bei Empfang von Zählimpulsen ein von der Wähleinrichtung (14) vorgebbares Zählintervall durchläuft, das dem gewünschten Portionsvolumen entspricht, am Ende des Zählintervalls einen Auslöseimpuls zum Abbremsen der Schraubenpumpe (2) abgibt und sich gleichzeitig auf den Anfang des Zählintervalls zurücksetzt, dass der Intervallzähler (7a) nach dem Zurücksetzen die dem ermittelten Nachlaufvolumen entsprechende Anzahl an Impulsen erhält und ab dem Einsetzen des nächsten Betriebsintervalls der Förderpumpe (3) zusätzlich die Ausgabeimpulse des Messwandlers (7) zählt, bis das Ende des Zählintervalls erreicht ist, ein neuer Auslöseimpuls zum Abbremsen der Schraubenpumpe (3) abgegeben wird und sich der Zähler zurücksetzt.

7. Vorrichtung nach Anspruch 6, dadurch gekennzeichnet, dass der Zähler (7a) unmittelbar nach dem Zurücksetzen und dem Auslösen der Abbremsung der Förderschrauben (3) die Ausgangsimpulse des Messwandlers (7) bis zum Stillstand der Förderschraube (3) zählt und hält, die einen Messwert für das Nachlaufvolumen des aktuellen Abbremsintervalls darstellen, und dass der Zähler (7a) beim Einsetzen des nächsten Betriebsintervalls die Ausgangsimpulse des Messwandlers zählt, bis das Ende des Zählintervalls erreicht ist, ein neuer Auslöseimpuls zum Abbremsen der Förderschrauben (3) abgegeben wird, und sich der Zähler zurücksetzt.

**Claims**

1. Means for the intermittent ejection of a sausage paste or the like, comprising a screw pump (2) which contains two feeding screws (3) and which is intermittently operated and, during the operating period, ejects the sausage paste into containers or casings in portions having a prescribed volume, possibly with a separating means for separating the last ejected portion from the next portion, and with a control means (1), which contains a selection device (14) for the provision of the required portion volume, a measuring means (6) for measuring the ejection volume of the separate operating periods and a release mechanism (18) which, when a specified ejection volume is reached, initiates a braking of the feeding screws (3), and possibly thereafter a separating operation and thereafter a fresh operating period of the feeding screws, a make-up volume of sausage paste flowing during the braking of the feeding screws into the last ejected portion, wherein the measuring means (6) contains devices (8) for determining the make-up volume, wherein a subtraction device (7a) is provided, which forms and intermediately stores the difference from the prescribed portional volume and the established make-up volume, and wherein the release mechanism (18) in each case initiates the braking of the feeding screws (3) when the actual ejection volume of the actual operating period as measured by the measuring means (6) is equal to the intermediately stored difference in volume.

2. Means according to Claim 1, wherein the screw pump (2) is capable of being intermittently driven through a clutch (4), wherein the measuring means (6) contains a measuring transformer (7), which measures the angle of rotation of the screw pump (2) and delivers a number of electrical output pulses which is proportional to the angle of rotation, and wherein the devices (8) for determining the make-up volume are connected following the measuring transformer (7) and establish the make-up volume as a corresponding number of output pulses of the measuring transformer (7).

3. Means according to Claim 2, wherein the devices (8) measure the make-up volume during the braking of each operating period.

4. Means according to Claim 3, wherein the devices (8) in each case only make use of the measurement immediately before the actual operating period for establishing the make-up volume.

5. Means according to Claim 4, wherein the devices (8) in each case store a prescribed constant number of measurement values which directly preceded the actual operating period and form a mean value in a mean value former (9) for the determination of the make-up volume.

6. Means according to one of Claims 1 to 4, wherein the measuring transformer (7) is followed by an interval counter (7a) which, on receiving counting pulses, passes through a counting interval which can ba prescribed by the selector arrangement (14) and which corresponds to the required volume of the portion, delivers at the end of the counting interval a release pulse for the braking of the screw pump (2) and is simultaneously set back to the start of the counting interval, wherein the interval counter (7a), after being set back, receives the number of pulses corresponding to the determined make-up volume and, from the initiation of the next operating period of the screw pump (2), additionally counts the delivery pulses of the measuring transformer (7), until the end of the counting period is reached, a fresh release pulse for braking the screw pump (2) is delivered and the counter is set back.

7. Means according to Claim 6, wherein the counter (7a), immediately after being set back and the initiation of the braking of the feeding screws (3), counts and holds the output pulses of the measuring transformer (7) until the feeding screws (3) stop, which pulses constitute a measurement value for the make-up volume of the actual braking interval, and wherein the counter (7a), with the initiation of the next operating period, counts the output pulses of the measuring transformer until the end of the counting period, a fresh release pulse for the braking of the feeding screws (3) is delivered and the counter is set back.

**Revendications**

1. Dispositif pour le bourrage intermittent de saucisses ou analogues, avec une pompe à vis (2) comportant deux vis de refoulement (3), qui fonctionne par intermittence et qui, pendant les intervalles de fonctionnement bourre la chair à saucisse dans des récipients ou des enveloppes suivant des portions ayant des volumes de portions prédéterminés, le cas échéant avec un dispositif de séparation pour séparer la portion élaborée en dernier lieu de la portion suivante, et avec un dispositif de commande (1) comportant un dispositif sélecteur (14) pour déterminer le volume de portion désiré, un dispositif de mesure (6) pour fournir le volume de bourrage des intervalles de fonctionnement individuels, et un dispositif de déclenchement (18) qui, chaque fois qu'est atteint un volume de bourrage déterminé, déclenche un ralentissement des vis de refoulement (3), le cas échéant à la suite un processus de séparation et à la suite un nouvel intervalle de fonctionnement des vis de refoulement, un volume supplémentaire de chair à saucisse étant amené pendant le ralentissement des vis de refoulement dans la portion bourrée en dernier lieu, caractérisé en ce que le dispositif de mesure (6) comporte des dispositifs (8) pour déterminer le volume supplémentaire amené, en ce qu'il est prévu un dispositif de sous-traction (7a), qui forme la différence entre le volume de portion prédéterminé et le volume supplémentaire amené déterminé et qui la met en mémoire intermédiaire, et en ce que le dispositif de déclenchement (18) déclenche le ralentissement des vis de refoulement (3) chaque fois que le volume de bourrage en cours de l'intervalle de fonctionnement en cours mesuré par le dispositif de mesure (6) est égal à la différence de volume mise en mémoire intermédiaire.

2. Dispositif selon la revendication 1, caractérisé en ce que la pompe à vis (2) peut être entraînée par intermittence par l'intermédiaire d'un embrayage (4), en ce que le dispositif de mesure (6) comporte un convertisseur de mesure (7), qui mesure l'angle de rotation de la pompe à vis (2) et émet un nombre d'impulsions électriques de sortie proportionnel à l'angle de rotation, et en ce que les dispositifs (8) pour déterminer le volume supplémentaire amené sont branchés à la suite du convertisseur de mesure (7) et déterminent le volume supplémentaire débité sous forme d'un nombre approprié d'impulsions de sortie du convertisseur de mesure.

3. Dispositif selon la revendication 2, caractérisé en ce que les dispositifs (8) mesurent le volume supplémentaire amené pendant le ralentissement de chaque intervalle de fonctionnement.

4. Dispositif selon la revendication 3, caractérisé en ce que les dispositifs (8) ne font appel qu'à la mesure ayant lieu immédiatement avant l'intervalle de fonctionnement en cours pour déterminer le volume supplémentaire amené.

5. Dispositif selon la revendication 4, caractérisé en ce que les dispositifs (8) mettent chaque fois en mémoire un nombre constant prédéterminé de valeurs de mesure précédant immédiatement l'intervalle de fonctionnement en cours et forment une valeur moyenne dans un organe (9) de formation de moyenne pour déterminer le volume supplémentaire amené.

6. Dispositif selon l'une des revendications 1 à 4, caractérisé en ce qu'un compteur d'intervalle (7a) est branché à la suite du convertisseur de mesure (7), ce compteur parcourant un intervalle de comptage prédéterminé par le dispositif sélecteur (14), lors de la réception d'impulsions de comptage, intervalle correspondant au volume de portion désiré, ledit compteur envoyant à la fin de l'intervalle de comptage une impulsion de déclenchement pour ralentir la pompe à vis et revenant en même temps au début de l'intervalle de comptage, en ce que le compteur d'intervalle (7a) reçoit après le retour au début un nombre d'impulsions correspondant au volume supplémentaire amené et, après le début de l'intervalle de fonctionnement suivant de la pompe de refoulement (3), compte en plus les impulsions de sortie du convertisseur de mesure (7), jusqu'à ce que soit atteinte la fin de l'intervalle de comptage, une nouvelle impulsion de déclenchement tant émise pour ralentir la pompe à vis (3) et le compteur revenant au début.

7. Dispositif selon la revendication 6, caractérisé en ce qu'immédiatement après le retour au début et le déclenchement du ralentissement des vis de refoulement (3), le compteur (7a) compte les impulsions de sortie du convertisseur de mesure (7) jusqu'à l'arrêt des vis de refoulement (3) et retient ces impulsions qui constituent une valeur de mesure du volume supplémentaire amené de l'intervalle de ralentissement en cours, et en ce que lors du début de l'intervalle de fonctionnement suivant, le compteur (7a) compte les impulsions de sortie du convertisseur de mesure, jusqu'à ce que soit atteint la fin de l'intervalle de comptage, une nouvelle impulsion de déclenchement étant émise pour le ralentissement des vis de refoulement (3) et le compteur revenant au début.

Fig.1

0 019 711

Fig.2

ABDREH-VORR.
22

3
2
4
7
6

PAUSEN-WÄHLER 16
WÄHL-EINR. 14
12
12

AUSLÖSE-EINR.
18
INTER-VALL-ZÄHLER 7a
MITTEL-WERTB. 9
8

TAKTGE-NERATOR 10

STEUER-LOGIK 11

20

0 019 711

Fig.3

ABDREH-VORR.

PAUSEN-WÄHLER

WAHL-EINR.

AUSLÖSE-EINR.

INTER-VALL-ZÄHLER

22    3    2    4    6    7    16    14    18    7a    1    20

0 019 711